(19) Europäisches Patentamt

European Patent Office

Office européen des brevets

(11) **EP 1 213 812 A2**

(12) **EUROPEAN PATENT APPLICATION**

(43) Date of publication:
    **12.06.2002 Bulletin 2002/24**

(51) Int Cl.$^7$: **H02H 3/38**

(21) Application number: **01129088.9**

(22) Date of filing: **07.12.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **07.12.2000  IT  TO001142**<br><br>(71) Applicant: **Fava, Natale**<br>**10093 Collegno (Torino) (IT)** | (72) Inventor: **Fava, Natale**<br>**10093 Collegno (Torino) (IT)**<br><br>(74) Representative: **Quinterno, Giuseppe et al**<br>**Jacobacci & Partners S.p.A.,**<br>**Corso Regio Parco, 27**<br>**10152 Torino (IT)** |

(54) **An electro-opto-electronic system for the directional detection of earth faults and of short-circuit faults in medium-voltage electrical networks**

(57)    An electro-opto-electronic system for the directional detection of earth faults in phase conductors (CFR, CFS, CFT) and of short-circuit faults between the conductors (CFR, CFS, CFT) in medium-voltage electrical network lines, comprises:

capacitive shunts (DCR, DCS, DCT) connected to the conductors (CFR, CFS, CFT) and respective first electro-optical convertors (EOVR, EOVS, EOVT) for generating first light signals representative of the presence of voltage (Er, Es, Et) between each conductor and earth and second light signals representative of the phase angle of the voltages (Er, Es, Et),

amperometric current transformers (TAIO, TAIR, TAIT) connected to the conductors (CFR, CFS, CFT) and respective second electro-optical converters (EOIO, EOIR, EOIT, EOITd) for generating third light signals representative of the phase angle of the homopolar current ($I_0$) of the line,

optical conductors (FO) for the remote transmission of the light signals, and

an electronic control unit (UE) arranged to determine the occurrence of a fault and/or the presence of voltage on the line, in dependence on the phase relationships between the signals received, which are representative of the voltages (Er, Es, Et) between each conductor and earth, on the homopolar voltage ($E_0$), and on the homopolar current ($I_o$).

The system determines the phase angle of the homopolar voltage ($E_0$) of the line by analog or digital means, in dependence on the phase relationships between the signals representative of the voltages (Er, Es, Et) present between each conductor and earth.

FIG. 1

EP 1 213 812 A2

**Description**

The present invention relates to an electro-opto-electronic system for the directional detection of earth faults in phase conductors and of short-circuit faults between the phase conductors of medium-voltage electrical networks operated with insulated neutral or with neutral earthed by means of compensation impedance.

The system is intended for use in the electrical distribution boards of medium-voltage electrical transformer houses or in any case in all electrical installations in general, at the points or at the nodes of the electrical network where it is necessary to identify a line or section affected by a fault.

One of the requirements inherent in satisfying the present demand for improved quality of the electrical-energy distribution service is that of providing automatic apparatus and personnel employed in the running of medium-voltage networks with the information necessary to identify correctly the medium-voltage lines or sections which are affected by faults.

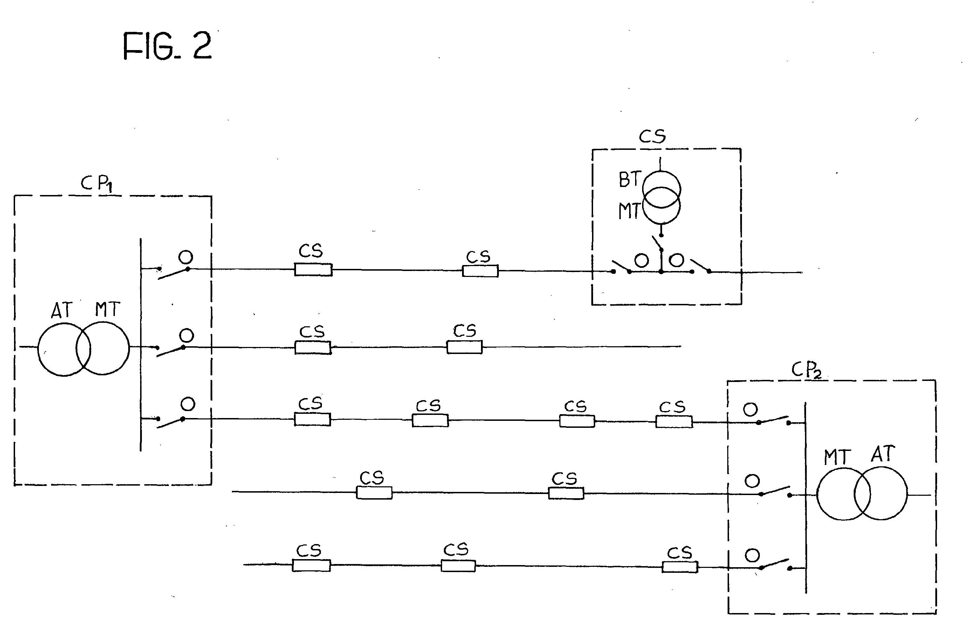

In fact, in a hypothetical medium-voltage network (see Figure 2) constituted by several medium-voltage lines which branch out from two or more primary high tension/medium tension transformer houses (CP) and extend to supply, with successive sections of medium-voltage line, several secondary medium voltage/low voltage or sectioning transformer houses (CS), if an earth or short-circuit fault occurs in a line or section, there is a risk that the entire network will be put out of service, with consequent problems for continuity of operation.

To prevent this situation, it is therefore necessary to have available means which can identify the single faulty medium-voltage line or section in order then to put it out of service quickly, ensuring continuity of service on the remaining lines and sections which are not affected by the fault.

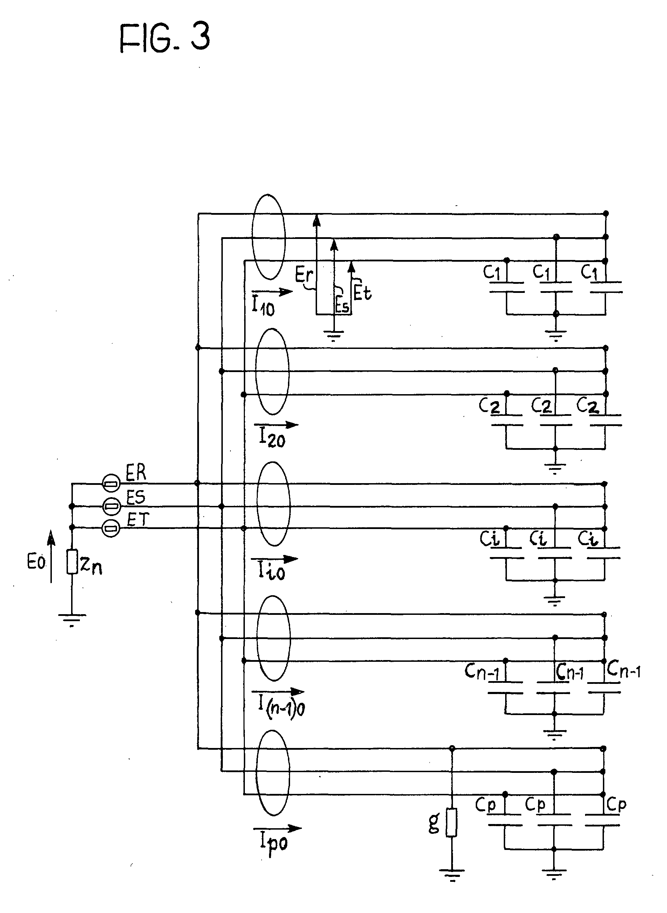

With reference to fault situations which may arise in a medium-voltage network owing to earth faults of the phase conductors, Figure 3 shows schematically a system operated with neutral earthed by means of compensation impedance, and indicates the electrical quantities relating to:

- the three phase voltages ER, ES, ET, which depend on the generators and may therefore be considered constant,

- the three voltages Er, Es, Et of the conductors relative to earth, which coincide with ER, ES, ET in normal conditions,

- the homopolar voltage $E_0$ and the homopolar current $I_0$ which are produced when there is a fault.

It is assumed that, at a certain moment, an earth fault appears in the p-th line, that is, that a situation of localized continuity of the insulation arises, as a result of which the conductor is earthed by means of a fault conductance (g) whilst the remaining n-1 undamaged lines give solely their capacitive contribution to the homopolar current, which is proportional to their own capacitances $C_i$ and is equal to:

$$I_{i0} = j \cdot \omega \cdot C_i \cdot E_0$$

where $E_0$ is the homopolar voltage.

If the first Kirchhoff's law is applied to the homopolar current, the following equation is obtained:

$$\frac{E_0}{Z_n} + \sum_{i=1}^{n-1} 3 \cdot I_{i0} + 3 \cdot I_{p0} = 0$$

in which $Z_n$ is the compensation impedance and can be represented by a reactance in parallel with a resistance ($1/G_n$) :

$$\frac{1}{Z_n} = G_n + \frac{1}{j \cdot \omega \cdot L_n}$$

Processing of the equations given above gives, for the homopolar current in the faulty line:

$$I_{p0} = E_0 \cdot \left( j \cdot k - \frac{G_n}{3} \right)$$

in which

$$k = \frac{1}{\omega \cdot L_n \cdot 3} - \sum_{i=1}^{n-1} \omega \cdot C_i$$

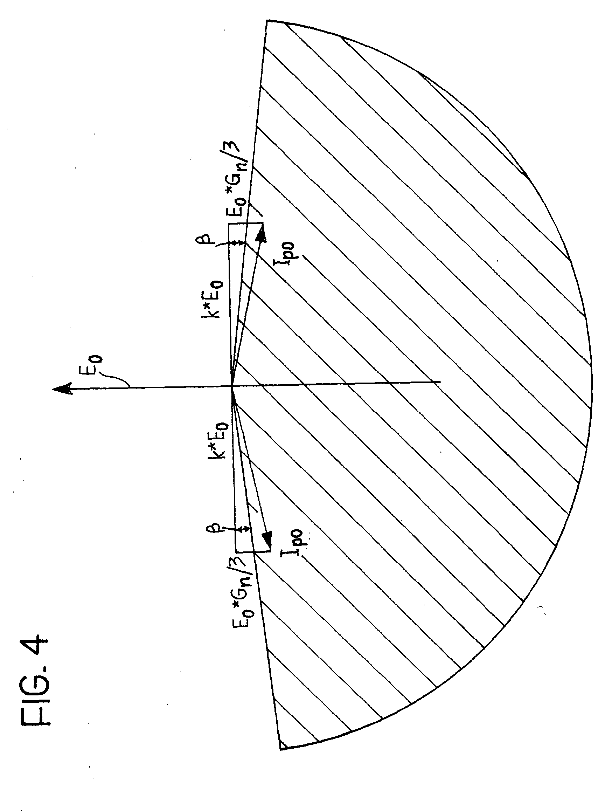

The polar diagram can be seen in Figure 4.

In conclusion, if there is a faulty line, if the phase displacement between the homopolar voltage and the homopolar current falls within the hatched portion of the polar diagram, the line under test can be considered to be faulty.

For operation with insulated neutral, the equations given above can be simplified by setting $Z_n = \infty$, that is $G_n = 0$, and $L_n = \infty$, which thus gives:

homopolar currents in the undamaged lines

$$I_{i0} = j \cdot \omega \cdot C_i \cdot E_0$$

homopolar current in the faulty line

$$I_{p0} = -E_0 \cdot \left[ \sum_{i=1}^{n-1} j \cdot \omega \cdot C_i \right]$$

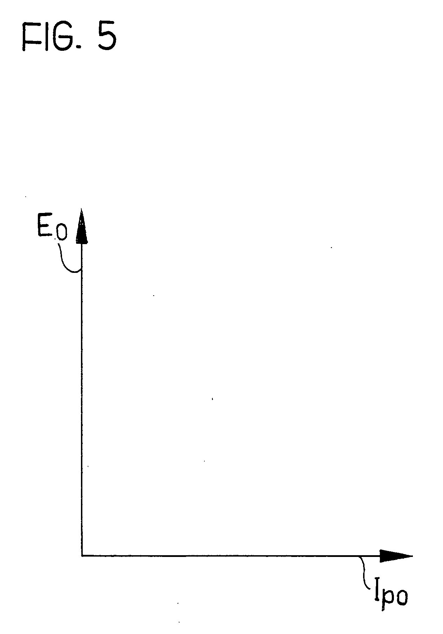

The polar diagram which can be seen in Figure 5 identifies the faulty line by means of the vector of the homopolar current $I_0$ which is delayed by $\pi/2$ relative to the homopolar voltage $E_0$.

With reference to the foregoing, the solution of the problem is that of providing, on each medium-voltage line or section of line which branches off, a device which can recognize, as a consequence of the factor described in the previous point, whether the line is faulty or not, and can therefore section the medium-voltage line or section affected by the fault, by means of controls operated by personnel running the network, or automatically, leaving the whole of the rest of the network in operation.

Nowadays, the device in question is used widely and is known as a "directional earth relay" since it identifies the undamaged lines and the faulty medium-voltage line or section, as specified above, and can discriminate the direction of the earth fault with reference to the point of supply of the medium-voltage network.

A conventional "directional earth relay" is of electromechanical construction and is formed by two coils of which one is movable; the magnetic fields of the coils, which are generated by a signal proportional to the homopolar current $I_0$ and by a signal proportional to the homopolar voltage $E_0$, respectively, interact in appropriate manner creating, in the movable coil, a moment of value:

$$C_M = K \cdot E_0 \cdot I_0 \cdot \cos(\theta - \tau)$$

in which $\theta$ is the phase-displacement angle between the voltage and the current and $\tau$ is the phase displacement at which the moment is at a maximum. If the homopolar voltage vector is taken as a reference and the direction of the current for which the moment is at a maximum is fixed (phase displacement of an angle $\tau$ relative to the voltage), if the homopolar current $I_0$ is within an angle of $\pm \pi/2$ relative to this direction, the moment on the movable device is positive and can therefore trigger the relay contact, otherwise it is negative. The directionality of the relay is calibrated by modifying the value of the angle $\tau$, which is achieved, for example, by inserting an impedance in series with the voltmeter coil.

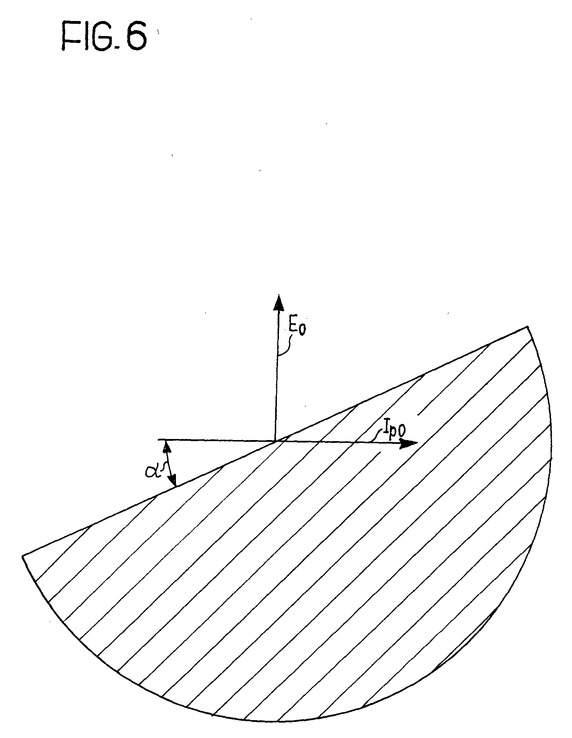

Figure 6 shows the polar diagram in which the intervention zone of the relay is indicated by hatching; during calibration it is necessary to arrange for the angle $\alpha$ to be such as to contain the entire intervention zone in which the homopolar current $I_0$ of a medium-voltage network subject to an earth fault and operated with neutral earthed by means of compensation impedance may be disposed (see Figure 4), and the zone in which the homopolar current $I_0$ of a medium-voltage network subject to an earth fault and operated with insulated neutral is disposed (see Figure 5).

The correct operation condition is such that the angle $\alpha$ of Figure 6 should be less than angle $\beta$ of Figure 4.

Nowadays, electromechanical relays have been replaced by electronic relays, but the operating principle has remained almost unchanged since the relay implements the product described in the formula indicated above by analog or digital means, discriminating the positive sign by an intervention signal and the negative sign by a non-intervention state.

The homopolar electrical quantities, the homopolar voltage $E_0$, and the homopolar current $I_0$, which are necessary for the operation of the relay are normally taken, with regard to the voltage, from the circuit of the open-delta connected secondary windings, of a set of three voltmeter transformers connected between phase and earth and, with regard to the current, from the secondary winding of a toroidal current transformer which extends around all three phase conductors.

The disadvantages of the system can be indicated as:

- the high costs of the voltmeter transformers and of the current transformers, owing to their specific construction which, in this type of use, has to take account of:

    a high degree of accuracy in order to minimize angle and ratio errors which would otherwise create unacceptable errors in the determination of the homopolar voltage $E_0$ and

    of the homopolar current $I_0$, hindering the operation of the relay, and

    performance suitable to make up for the considerable losses of the measurement circuits of the relay;

- the high costs of the relay in general but, above all, in the case of electronic relays, those due to the devices which are necessary to eliminate the effects of interference by electromagnetic induction, which interference is introduced by the connections of the voltmeter transformers and of the current transformer and may damage the circuits of the relay, hindering its operation, and

- greater costs for the construction of the medium-voltage distribution board as a result of the activities to be undertaken to cope with the considerable dimensions of the space required by the voltmeter transformers, both with regard to the physical spaces necessary for housing them and with regard to the spaces for ensuring the necessary distances for insulation relative to earth and to other medium-voltage components.

With the use of voltmeter transformers with capacitive shunts (which cannot be screened like electromagnetic induction transformers) a fault in the capacitive shunt may transmit the medium voltage to the low voltage circuits, naturally with damage to property and risks to people operating at the time in question. With reference to the above-mentioned losses of the relay, the capacitance of the capacitive shunts must necessarily be high; the satisfaction of this requirement, however, results in a greater dielectric stress of the shunt with a reduction in reliability from both safety and operative points of view.

Upon this premise, the object of the present invention is to overcome the above-mentioned disadvantages by means of low-cost apparatus which can identify with reliability, both in medium-voltage systems with insulated neutral and in those with neutral earthed by means of compensation impedance, the medium-voltage line or section which is subject to an earth fault of the phase conductors or to a short-circuit between the conductors.

This object is achieved by a system having the characteristics recited in Claim 1.

According to the present invention, the concept proposed herein is that of providing a directional relay with the use, for its operation, of a microprocessor which is arranged to measure the phase-displacement angle existing between the homopolar voltage $E_0$ and the homopolar current $I_0$ by processing the times at which the signals indicative of the phase of the electrical quantities are received, producing the earth fault signal when this phase displacement is within the relay intervention zone (see Figure 6).

Further advantages and characteristics of the present invention will become clear from the following detailed description, given with the aid of the appended drawings, which are provided by way of non-limiting example, and in which:

Figure 1 is a schematic representation of an embodiment of the system according to the invention,

Figures 2 and 3 are schematic representations of a medium-voltage electrical network,

Figures 4 and 5 are polar diagrams of homopolar current and voltage for a faulty line for a network with earthed neutral or with insulated neutral, respectively,

Figure 6 is a polar diagram of homopolar current and voltage, indicating the intervention zone for a faulty line, and

Figures 7, 8 and 9 are polar diagrams which show the voltages of the phase conductors in the event of a fault.

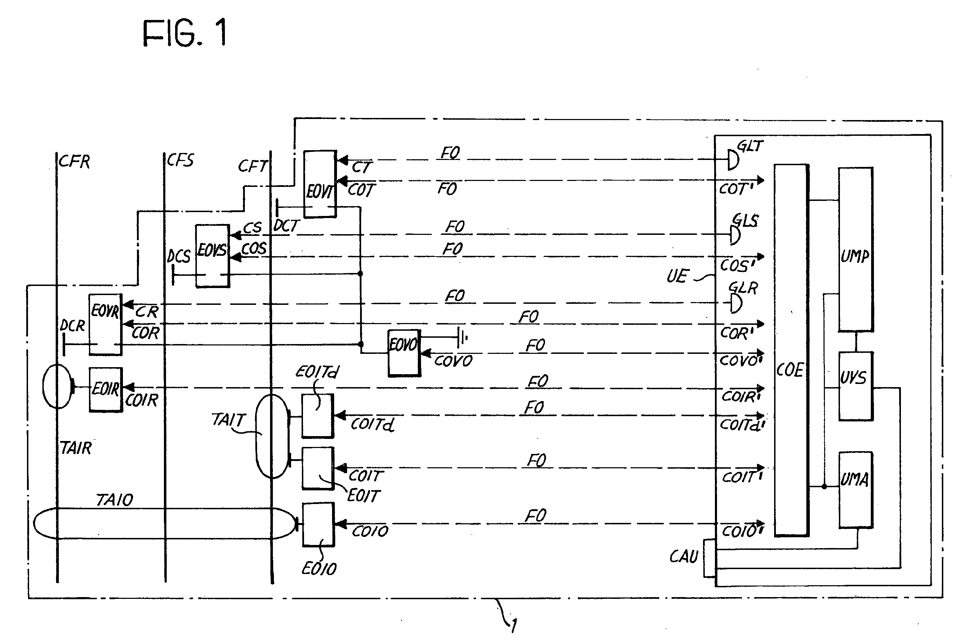

The system will now be described in detail with reference to Figure 1, with the information that the following description relates to medium-voltage or high-voltage systems.
The system comprises the following devices:

- a set of three capacitive shunts DCR, DCS, DCT with very low capacitance which are fitted at the ends of the medium-voltage cables or in the insulators supporting the medium-voltage phase conductors CFR, CFS, CFT, and which can supply currents of a few tens of microamperes in the presence of voltages Er, Es, Et relative to earth at the nominal value;

- a set of three first electro-optical devices EOVR, EOVS, EOVT which are supplied with the current of the capacitive shunts DCR, DCS, DCT and can produce:

  - a light signal indicative of the presence of the voltages Er, Es, Et relative to earth, and made available to connectors CR, CD, CT, and

  - a light signal indicative of the phase angle of the voltages Er, Es, Et, made available to optical connectors COR, COS, COT;

- a second electro-optical device EOVO which is supplied with the current resulting from the vectorial sum of the three currents supplied by the capacitive shunts, and which generates, to a corresponding optical connector COVO, a light signal indicative of the phase angle of the homopolar voltage $E_0$ of the medium-voltage system;

- a first toroidal, amperometric transformer TAIO, that can be opened, with a very low electrical rating which, in the presence of a homopolar current $I_0$ of a few tenths of an ampere in the medium-voltage system, provides a current of a few tens of microamperes in the secondary;

- a third electro-optical device EOIO which is supplied with the current of the transformer TAIO and which generates, at a respective optical connector COIO, a light signal indicative of the phase angle of the homopolar current $I_0$ of the medium-voltage line;

- a second, toroidal, amperometric transformer TAIR, that can be opened, with a very low electrical rating which, in the presence of a primary current of a few hundred amperes, can produce a secondary current of a few tens of milliamperes;

- a third, toroidal, amperometric transformer TAIT, that can be opened, provided with two secondary windings with a very low electrical ratings, of which one can supply a secondary current of a few tens of milliamperes in the presence of a primary current of a few hundred amperes, and the other can supply a secondary current of a few tens of microamperes in the presence of a primary current of a few units of amperes;

- a pair of fourth electro-optical devices EOIR and EOIT which can produce respective light signals at the optical connectors COIR and COIT when the phase current in the medium-voltage circuit exceeds a threshold of a few hundred amperes;

- a fifth electro-optical device EOITd which can supply a light signal indicative of the phase angle to the connector COITd when the phase current in the medium-voltage circuit exceeds a threshold of one ampere;

- an optical-fibre interconnection system FO which connects all of the electro-optical devices to an electronic processing unit UE, in an insulated manner, and

- an electronic processing unit UE comprising:

a plurality of optical connectors COR', COS', COT', COVO', COIO', COIR', COIT', COITd' which can receive, from the optical fibres FO, the light signals emitted by the electro-optical devices;

a plurality of optical diffusers GLR, GLS, GLT with lenses, which can receive light signals relating to the voltage-presence state, from the electro-optical devices EOVR, EOVS, EOVT, by means of optical fibres, and can diffuse them visibly to the operators;

an opto-electrical sub-unit COE for converting the light signals received from the optical fibres FO;

an electronic microprocessor processing sub-unit UMP arranged for processing the electrical signals supplied by the unit COE;

a sub-unit for the management and display of the signals produced by the processing performed by the sub-unit UMP;

an auxiliary supply sub-unit UMA, and

an electrical connector CAU for external supply and signalling circuits.

The functional capabilities implemented by the system will now be described below with reference to the devices listed and described above.

Functional capability relating to the determination and indication of earth faults

It is accomplished by the microprocessor sub-unit in accordance with a preset program which can calculate the phase-displacement angle between the phase signals of the electrical quantities such as the homopolar voltage $E_0$ and the homopolar current $I_0$, on the basis of the times at which they are received.
If the phase displacement angle falls within the intervention zone indicated as the hatched portion of Figure 6, a first condition is determined.
A second condition is that of checking by what value the phase-displacement angles existing between the phase signals of the electrical quantities relating to the voltages Er, Es, Et relative to earth have changed, on the basis of the times at which the signals are received; in the absence of faults, these angles are equal to 120° electrical and coincide with those existing between the voltages ER, ES, ET.
Owing to the fact that the angular displacements between the vectors Er, Es, Et are closely connected with the value of the homopolar voltage $E_0$, the measurement of the values of these angular variations enables the sensitivity threshold for the recognition of the earth fault to be set by programming of the microprocessor sub-unit.
The simultaneous presence of the two conditions described above for a programmable number of periods is defined by the UMP as an earth-fault state.
This state is displayed locally on the processing unit EU by the lighting of an led and is indicated remotely by the closure of an electrical contact.

Functional capability relating to the congruent arrangement of the directions of the windings of the amperometric transformer TAIO for the detection of the homopolar current $I_0$.

This check is necessary to establish the congruent arrangement of the directions of the windings of the transformer TAIO with the direction of the energy supply, that is, in the specific case of the medium-voltage line which may be supplied by $CP_1$ or by $CP_2$ (see Figure 2), with the direction of supply from left to right or from right to left.
In the presence of a medium-voltage phase current of more than a few units of amperes due to the load, the electro-optical device EOITd sends a signal indicative of the phase angle to the sub-unit UMP which, on the basis of a program which is activated in a non-fault situation, checks that the phase of the current due to the load is within an angle of $\pm \pi/2$ relative to the phase of the star voltage Et. If the result is negative, UMP activates a specific program for variation of the angular reference of the phase of the current $I_0$.

Functional capability for the determination of a state of short-circuit between the phases

It is accomplished by the sub-unit UMP as a result of the optical information transmitted by one or both of the electro-optical devices EOIR and EOIT and occurs when the medium-voltage phase currents Ir and/or It exceed a threshold of a few hundred amperes.

This state is displayed locally on the UE by the lighting of an led and is indicated remotely by the closure of an electrical contact.

Functional capability for the remote determination of the voltage-presence state

It is accomplished by the sub-unit UMP on the basis of the receipt of the phase signals of the voltages Er, Es, Et relative to earth supplied by the electro-optical devices EOVR, EOVS and EOVT in accordance with a program preset for the predetermined uses and may be brought about by the presence of voltage relative to earth in one or all three of the conductors CFR, CFS and CFT.

This functional capability is indicated remotely by the closure of one or more contacts, always with reference to the type of use.

Functional capability for the local display of the voltage-presence state

This functional capability is implemented by the optical diffusers, GLR, GLS, GLT with lenses, which are located on the front of the electronic unit EU, and which diffuse the light signals received by means of optical fibres from the electro-optical devices EOVR, EOVS, EOVT.

Functional capability for gauging phase coincidence with other medium-voltage or high-voltage local or remote system elements

This functional capability is implemented by obtaining the optical signal indicative of the phase angle of the voltages Er, Es, Et relative to earth directly by means of the optical connectors COR, COS and COT, after they have momentarily been disconnected from the sub-unit COE, with opto-electrical device, of the processing unit, in order to be sent in light form by optical fibre, to external apparatus for checking parallel and/or phase-displacement conditions.

In addition to the functional capabilities described above, as a result of the implementation of particular software, the system can be arranged to fulfil another function which provides for the facility not to detect the directional passage of the current due to an earth fault in a fault situation characterized by a voltage value $V_0$, less than a calibratable threshold voltage $V_0$ preselected in the electronic unit (UE).

In this latter case, the electronic processing operations are performed by the system on matrices of data previously stored in the microprocessor unit (UMP) as tables compiled on mathematical bases. It is thus possible to determine the value of the modulus of the voltage $V_0$ also making available the functional capability relating to the measurement of the angular position of the vector $E_0$.

This functional capability can be used as an alternative to that performed by the electro-optical converter EOVO so that, in the system in which the preselection of the voltage threshold $V_0$ is implemented, the converter EOVO can also be omitted.

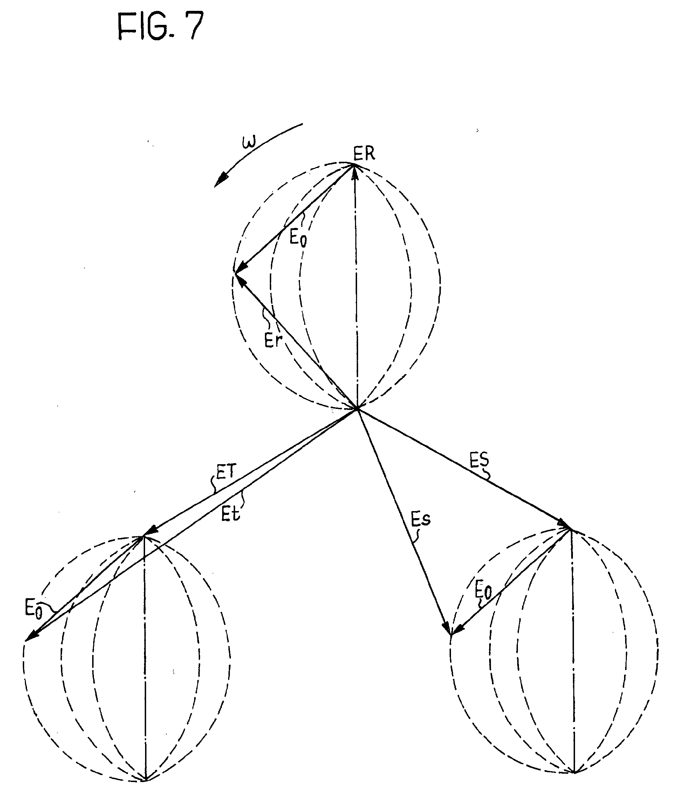

Figure 7 is the polar diagram which shows an earth-fault situation in the medium-voltage network, indicating the three phase voltages ER, ES, ET which depend on the generators and the three voltages Er, Es, Et of the conductors relative to earth, which no longer coincide with ER, ES, ET.

In this diagram which, for brevity of explanation, indicates the operation of a medium-voltage network both with insulated neutral and with neutral earthed by means of compensation impedance, a generic vector $E_0$ is also indicated, together with a generic series of curves considered as the geometrical loci on which this vector $E_0$ may be included and defined.

For a network with insulated neutral, these curves are characterized by a semicircle on the left-hand side of the vector ER having ER/2 for radius and for centre, whereas, for a medium-voltage network with neutral earthed by means of compensation impedance, they are characterized by a series of elliptical curves, each of which is representative both of the degree of compensation of the medium-voltage network, and of the fault resistance value, as well as of a series of factors closely connected with the characteristics of the apparatus used for the compensation of the medium-voltage network.

With reference to the receipt of the phase signals of the voltages Er, Es, Et relative to earth, both in a condition in which the system is activated on an already-energized medium-voltage line, and upon the appearance of the medium voltage when the system is already activated, the system stores the first signal indicative of the phase angle supplied by the electro-optical converters EOVR, EOVS, EOVT.

This stored signal will be defined by the system by a vector Er representative of the voltage relative to earth and will be associated with the vector ER representative of the generator phase which must be held as reference for all of the subsequent acquisitions of signals and processing operations performed by the system.

Given that the system succeeds in measuring angles $\gamma_{12}$ and $\gamma_{23}$ which are defined, respectively, as phase-displacement angles between the voltages Er and Es relative to earth and between the voltages Es and Et, which are functions of the vector $E_0$, the value of the modulus and of the phase displacement of the homopolar voltage $E_0$ can be obtained on the basis of these measurements.

The connection between the quantities obtained is indicated in the following equation, which is derived from trigonometrical considerations.

$$\gamma_{12} = \frac{2}{3} \cdot \pi + a\tan\left(\frac{V_0 \cdot \sin\left(\frac{\pi}{3} - \beta\right)}{1 + V_0 \cdot \cos\left(\frac{\pi}{3} - \beta\right)}\right) - a\tan\left(\frac{V_0 \cdot \sin(\beta)}{1 - V_0 \cdot \cos(\beta)}\right)$$

$$\gamma_{23} = \frac{2 \cdot \pi}{3} - a\tan\left(\frac{V_0 \cdot \sin\left(\frac{\pi}{3} + \beta\right)}{1 + V_0 \cdot \cos\left(\frac{\pi}{3} + \beta\right)}\right) - a\tan\left(\frac{V_0 \cdot \sin\left(\frac{\pi}{3} - \beta\right)}{1 + V_0 \cdot \cos\left(\frac{\pi}{3} - \beta\right)}\right)$$

where

$\gamma_{12}$ is the phase displacement between the first phase Er and the second phase Es of the set of three actual voltages relative to earth present on the network;

$\gamma_{23}$ is the phase displacement between the second phase Es and the third phase Et of the set of three actual voltages relative to earth present on the network;

$V_0 = E_0/E$ is the ratio between the homopolar voltage and the voltage of the generators;

$\beta$ is the phase-displacement angle between the homopolar voltage $E_0$ and the voltage of the generators (-ER).

By inverting the system of equations indicated above by numerical techniques, it is possible to find equations such as:

$$V_0 = f(\gamma_{12}, \gamma_{23})$$

$$\beta = f(\gamma_{12}, \gamma_{23})$$

By quantifying it is possible to find a correspondence matrix and the intermediate values between the quantified values can be found by linear interpolation.

In order to be able to have an absolute angular reference for the homopolar voltage, it is necessary to know by how much the voltage of the generators ER is out of phase with the voltage relative to earth Er measured and, to do this, it is necessary to introduce an angle $\alpha1$.

The angle $\alpha1$ is calculated from the following formula:

$$\alpha 1 = -a\tan\left(\frac{V_0 \cdot \sin(\beta)}{1 - V_0 \cdot \cos(\beta)}\right)$$

On the basis of the calculations indicated above it is possible to compile the following three tables, in accordance with a correspondence matrix:

- a first table, which gives the angles $\gamma_{23}$ in the columns and the angles $\gamma_{12}$ in the lines, expressed in radians, determines the value of the modulus of the voltage $V_0$;

- a second table, which gives the angles $\gamma_{23}$ in the columns and the angles $\gamma_{12}$ in the lines, expressed in radians, determines the value of the angle $\beta$;

- a third table, which gives the values deduced from the first two tables, that is, the value of the modulus of the voltage $V_0$ in the columns and the value of the angle $\beta$ in the lines, determines the angle $\alpha 1$.

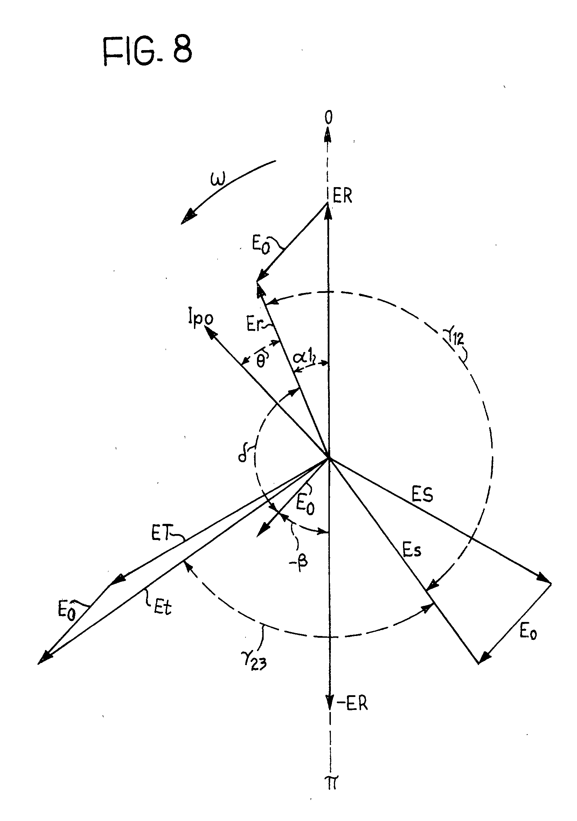

After the measurement, performed by the system, of the angle $\theta$, defined as the phase-displacement angle between the homopolar current $I_{p0}$ and the voltage relative to earth Er (see Figure 8), the processing unit activates one of the following procedures:

Case No. 1

Phase signals of the voltages Er, Es, Et relative to earth are present.

1. The angles $\gamma_{12}$ and $\gamma_{23}$ are measured.
2. The first table, two adjacent columns for which the values indicated in the first line contain $\gamma_{23}$ are selected; the same procedure is applied for two adjacent lines containing the values of $\gamma_{12}$.
3. The linear interpolation is performed:

$$V_0 = V_{0\text{ line(i),column(j)}} + \frac{V_{0\text{ line(i+1),column(j)}} - V_{0\text{ line(i),column(j)}}}{\gamma_{12\text{ line(i+1)}} - \gamma_{12\text{ line (i)}}} \cdot (\gamma_{12} - \gamma_{12\text{ line(i)}}) +$$

$$+ \frac{V_{0\text{ line(i),column(j+1)}} - V_{0\text{ line(i),column(j)}}}{\gamma_{23\text{ column(j+1)}} - \gamma_{23\text{ column(j)}}} \cdot (\gamma_{23} - \gamma_{23\text{ column(j)}})$$

4. Similarly, the linear interpolation of the values of the angles $\gamma_{12}$ and $\gamma_{23}$ is performed on the second table for the determination of the angle $\beta$, bearing in mind that, if the value is greater than 180°, the angle to be considered is that which is complementary to $2\pi$, with changed sign.
5. If $V_0$ is below the predetermined threshold, the system does not proceed with further processing.
6. If the modulus of the voltage $V_0$ is above the predetermined threshold, the system performs, on the third table (applying the linear interpolation of the type indicated in point 3), reading of the columns which give the value of the voltage modulus $V_0$ and of the lines which give the value of the angle $\beta$, in order to determine the angle $\alpha 1$.
7. The phase-displacement angle $\delta$ between the homopolar voltage $E_0$ and the voltage relative to earth Er is determined by calculation of $\pi - \alpha 1 + \beta$, performed by the system, bearing in mind that, if the value of the angle $\delta$ is greater than $\pi$, the angle to be considered is the complement to $2\pi$, with changed sign.
8. The system calculates the phase-displacement angle between the homopolar voltage $E_0$ and the homopolar current $I_{p0}$ by subtracting the angle $\theta$ previously measured from the angle $\delta$, bearing in mind that if the value of the angle is greater than $\pi$, the angle to be considered is the complement to $2\pi$ with changed sign.
9. If the angle calculated in point 8 is greater than +1.308 radians (+75°) or (+76°), or less than -1.832 radians (-105°) or -(106°) (examples of typical preset working values), since the vector $I_{p0}$ is within the hatched zone of the graph of Figure 6, the system detects and defines, by its local and remote signals, a directional earth-fault situation.

Case No. 2

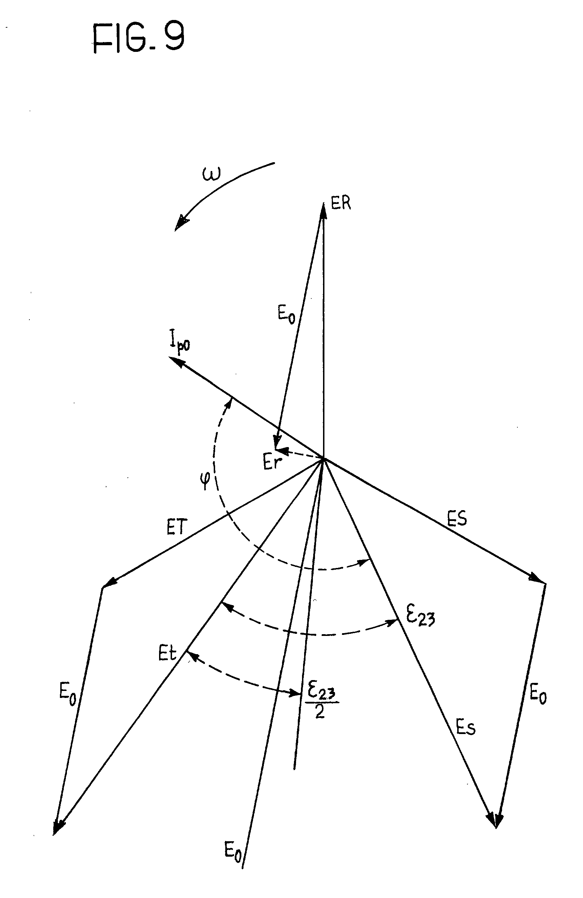

Owing to complete or almost complete cancelling-out of the voltage Er because of an earth fault (see Figure 9), only the phase signals of the voltages Es, Et are present;

1. The system measures the angle smaller than $\pi$ radians existing between the two remaining voltages, in this case $\varepsilon_{23}$.

2. The system considers as a reference the vector of the voltages relative to earth which is in advance, in this case, the vector Es.

3. The system measures the phase-displacement angle $\varphi$ between the current $I_{p0}$ and the voltage Es, bearing in mind that, if the value of the angle is greater than $\pi$, the angle to be considered is the complement to $2\pi$ with changed sign.

4. The system adds the angle $\varepsilon_{23}/2$ to the angle $\varphi$, obtaining the phase-displacement angle between the voltage $E_0$ and the current $I_{p0}$, bearing in mind that, if the value of the angle is greater than $\pi$, the angle to be considered is the complement to $2\pi$ with changed sign.

5. If the angle calculated in point 4 is greater than +1.308 radians (+75°) or (+76°), or less than -1.832 radians (-105°) or (-106°), (examples of typical preset working values) since the vector $I_{p0}$ is within the hatched zone of the diagram of Figure 6, the system detects and defines, by its local and remote signals, a directional earth-fault situation.

In a currently-preferred embodiment, the system provides for the following components and devices, all of which are of low cost, although the use of different materials is possible:

- capacitive shunts fitted in the terminals of the cables or in the medium or high-voltage support insulators;

- electro-optical devices of known type, for example, of the type described in EP 0 629 864, which, in the presence of medium or high voltage, supply light signals indicative of the phase angles of the voltages and light signals indicative of the voltage-presence state;

- low-cost, toroidal, amperometric current transformers, that can be opened;

- electro-optical devices which supply light signals indicative of the phase angles of the currents, and light signals indicative of the exceeding of a predetermined threshold value of the medium-voltage phase current;

- low-cost, flexible, PVC, optical fibres for the transmission of the light signals to the processing unit;

- PVC optical connectors.

In summary, the advantages achieved by the present invention are:

- the ability to use voltage transformers with capacitive shunts of very low capacitance and very low cost, at the same time ensuring a high degree of safety in relation to risks of electrocution owing to capacitive-shunt faults with dielectric leakage towards the power portion, since the connections between the capacitive shunt and interface points of respective operating electrical circuits of the relay, of the auxiliary circuits for the local and remote voltage-presence state signals, as well as for interface points necessary for performing the phase-coincidence checking activity are made of insulating material;

- the use of current transformers of toroidal construction, that can be opened, of very low cost and small dimensions for installation on cables or other system elements, since they have to transfer to the electro-optical converters very low currents (of the order of a few tens of microamperes for the definition of the optical signals indicative of the phase, and of a few tens of milliamperes for the definition of the optical signals indicative of the exceeding of the threshold by the medium-voltage phase current);

- local indication of the voltage-presence state, irrespective of the presence of an auxiliary electrical supply;

- transfer of the voltage and current phase signals, the voltage-presence signals, and the signals relating to the exceeding of the threshold values by the currents, by means of optical fibres, even at considerable distance (a few tens of metres), with a high degree of immunity from environmental interference.

It should be noted that, in contrast with the transmission of electrical signals with connections in electrical conductors, the transmission of the light signals in optical fibres, particularly in this type of use, is not affected by attenuation and variations of the phase angles of the signals supplied by the capacitive shunts. In fact, when these signals are transmitted by electrical connections, they are greatly affected by the capacitance of the connection cable as well as by the parasitic capacitances due to the environment.

Naturally, the principle of the invention remaining the same, the details of construction and forms of embodiment may be varied widely with respect to those described and illustrated, without thereby departing from the scope of the present invention as defined by the appended claims.

## Claims

1. An electro-opto-electronic system for the directional detection of earth faults in phase conductors (CFR, CFS, CFT) and of short-circuit faults between the conductors (CFR, CFS, CFT) in medium-voltage electrical network lines, **characterized in that** it comprises:

   capacitive-shunt means (DCR, DCS, DCT) operatively connected to the conductors (CFR, CFS, CFT) and adapted to generate first electrical signals in the presence of voltage in the conductors (CFR, CFS, CFT),

   first electro-optical convertor means (EOVR, EOVS, EOVT) operatively connected to the shunt means (DCR, DCS, DCT) and adapted to convert the first electrical signals into first light signals representative of the presence of voltage (Er, Es, Et) between each conductor and earth, and into second light signals representative of the phase angles of the voltages (Er, Es, Et),

   amperometric current-transformer means (TAIO, TAIR, TAIT) operatively connected to the conductors (CFR, CFS, CFT) and adapted to generate second electrical signals representative of the moduli and of the phases of the currents in the conductors,

   second electro-optical converters (EOIO, EOIR, EOIT, EOITd) operatively connected to the amperometric transformer means (TAIO, TAIR, TAIT) and adapted to convert the second electrical signals into third light signals representative of the phase angle of the homopolar current ($I_0$) of the line,

   optical conductor means (FO) connected to the first and second electro-optical converter means (EOVR, EOVS, EOVT; EOIO, EOIR, EOIT, EOITd) for the remote transmission of the light signals, and

   an electronic control unit (UE) including:

   - opto-electrical converter means (COE) connected to the optical conductor means (FO) in order to receive the light signals generated by the first and second electro-optical converter means (EOVR, EOVS, EOVT; EOIO, EOIT, EOIR, EOITd) and to generate corresponding electrical signals,

   - electronic processing means (UMP) suitable for receiving the electrical signals generated by the opto-electrical conversion means (COE) and arranged to determine the occurrence of a fault and/or the presence of voltage on the line in dependence on the phase relationships between the signals representative of the voltages (Er, Es, Et) between each conductor and earth, on the homopolar voltage ($E_0$), and on the homopolar current ($I_0$), and

   - display means (UVS) for indicating to a user the fault and voltage-presence conditions thus determined,

   the system comprising means (EOVO; UMP) for determining the phase angle of the homopolar voltage ($E_0$) of the line in dependence on the phase relationships between the signals representative of the voltages (Er, Es, Et) present between each conductor and earth.

2. A system according to Claim 1, **characterized in that** the means for determining the phase angle of the homopolar voltage comprise third electro-optical converter means (EOVO) operatively connected to the capacitive-shunt means (DCR, DCS, DCT) and adapted to receive an electrical sum signal representative of the vectorial sum of the first electrical signals generated by the shunt means (DCR, DCS, DCT) and to convert the electrical sum signal into a fourth light signal representative of the phase angle of the homopolar voltage ($E_0$) of the line.

3. A system according to Claim 2 in which the opto-electrical converter means (COE) are connected to the third electro-optical converter means (EOVO) by means of a respective optical conductor in order to receive the fourth light signal and to generate a corresponding electrical signal representative of the phase angle of the homopolar voltage ($E_0$), the electrical signal being intended to be transmitted to the electronic processing means (UMP).

4. A system according to Claim 1, **characterized in that** the processing means (UMP) of the control unit (UE) are arranged to calculate the phase angle of the homopolar voltage ($E_0$) of the line on the basis of the phase relationships between the signals representative of the voltages (Er, Es, Et) present between each conductor and earth by solving, by numerical means, a system of two equations with two unknowns of the type:

$$E_0 = f(\gamma_{12}, \gamma_{23})$$

$$\beta = f(\gamma_{12}, \gamma_{23})$$

in which $\beta$ is the phase-displacement angle between the homopolar voltage ($E_0$) and the supply voltage of the line in the absence of faults (-ER),
the following algebraic relationships being known:

$$\gamma_{12} = \frac{2}{3} \cdot \pi + a\tan\left(\frac{V_0 \cdot \sin\left(\frac{\pi}{3} - \beta\right)}{1 + V_0 \cdot \cos\left(\frac{\pi}{3} - \beta\right)}\right) - a\tan\left(\frac{V_0 \cdot \sin(\beta)}{1 - V_0 \cdot \cos(\beta)}\right)$$

$$\gamma_{23} = \frac{2 \cdot \pi}{3} - a\tan\left(\frac{V_0 \cdot \sin\left(\frac{\pi}{3} + \beta\right)}{1 + V_0 \cdot \cos\left(\frac{\pi}{3} + \beta\right)}\right) - a\tan\left(\frac{V_0 \cdot \sin\left(\frac{\pi}{3} - \beta\right)}{1 + V_0 \cdot \cos\left(\frac{\pi}{3} - \beta\right)}\right)$$

5. A system according to Claim 4, **characterized in that** the processing means (UMP) of the control unit (UE) are arranged to determine the fault condition of the line by comparing the phase-displacement angle between the homopolar voltage ($E_0$) and the homopolar current ($I_{p0}$) with a predetermined threshold value, the angle being calculated by the processing means as the difference between the phase-displacement angle ($\delta$) between the homopolar voltage ($E_0$) and the voltage (Er) between a predetermined conductor and earth, and the phase-displacement angle ($\theta$) between the homopolar current ($I_{p0}$) and the voltage (Er) between the conductor and earth.

6. A system according to Claim 5, **characterized in that** the processing means (UMP) of the control unit (UE) are arranged to calculate the phase-displacement angle ($\delta$) between the homopolar voltage ($E_0$) and the voltage (Er) between the predetermined conductor and earth as the result of the algebraic sum:

$$\pi - \alpha 1 + \beta$$

the parameter $\alpha 1$ being determinable in dependence on the homopolar voltage ($E_0$) and the phase-displacement angle between the homopolar voltage ($E_0$) and the supply voltage of the line in the absence of faults (-ER), in accordance with the equation:

$$\alpha 1 = -a\tan\left(\frac{V_0 \cdot sin\,(\beta)}{1 - V_0 \cdot \cos\,(\beta)}\right)$$

7. A system according to any one of the preceding claims, **characterized in that** the display means comprise optical diffuser means (GLR, GLS, GLT) with lenses, for the diffusion of the first light signals.

8. A system according to any one of the preceding claims, **characterized in that** the electronic processing means (UMP) can determine the direction of supply of the electrical line in dependence on the signal representative of the phase angle of the voltage of a predetermined conductor (Et) and on the signal indicative of the phase angle of the current (It) flowing through the conductor.

9. A system according to any one of the preceding claims, **characterized in that** the optical conductor means (FO) can be disconnected from the opto-electrical converter means (COE) of the control unit (UE) and are arranged to be connected, alternatively, to an external apparatus for checking the parallel and/or phase-displacement conditions relative to other elements of the network.
The whole substantially as described and illustrated and for the purposes specified.

FIG. 1

FIG. 2

EP 1 213 812 A2

# FIG. 3

FIG. 4

EP 1 213 812 A2

FIG. 5

$E_0$

$I_{po}$

FIG. 6

FIG. 7

FIG. 8

FIG. 9